# EUROPÄISCHE PATENTSCHRIFT

(11) **EP 0 650 768 B1**
(45) Veröffentlichungstag und Bekanntmachung des Hinweises auf die Patenterteilung: **16.07.1997**
(21) Anmeldenummer: 94114915.5
(22) Anmeldetag: 22.09.1994
(51) Int. Cl.: B05C 5/02, B29C 47/02, B60J 10/02

(54) **Verfahren und Vorrichtung zum Formen und zum Auftragen eines Profilstrangs auf eine Unterlage**
Process and device for forming and applying a profiled strip onto a substrate
Procédé et dispositif pour former et appliquer un cordon profilé sur un support

(30) Priorität: 02.11.1993 DE 4337291
(43) Veröffentlichungstag der Anmeldung: 03.05.1995
(73) Patentinhaber: Sika Chemie GmbH, D-70439 Stuttgart (DE)
(72) Erfinder: Breier, Bruno, D-75438 Knittlingen (DE)
(74) Vertreter: Wolf, Eckhard, Dr.-Ing.

(56) Entgegenhaltungen:
- EP-A- 0 444 998
- EP-A- 0 524 092
- GB-A- 2 125 474
- US-A- 4 581 807

## Beschreibung

Die Erfindung betrifft ein Verfahren zum Formen und zum Auftragen eines Profilstrangs auf eine Unterlage, bei welchem ein pastöses, vorzugsweise elastomer aushärtbares, klebriges Kunststoffmaterial unter Bildung des Profilstrangs geformt und fortlaufend unter Relativbewegung auf die Unterlage appliziert und anschließend ausgehärtet wird, wobei das Kunststoffmaterial zu einem offenen, zumindest partiell im wesentlichen U-förmigen Profil mit zwei freien Schenkeln aufweisenden Profilstrang geformt wird. Weiter betrifft die Anmeldung eine Vorrichtung zur Durchführung dieses Verfahrens, sowie eine Dichtungsanordnung und eine Verwendungsart des Verfahrens und der Vorrichtung.

Im Automobilbau ist es bereits bekannt, zur Herstellung von Scheibendichtungen ein klebriges Kunststoffmaterial in pastöser Form unter Bildung eines Profilstrangs auf eine Scheibe aufzutragen und dort unter Bildung einer elastisch nachgiebigen Dichtungsleiste elastomer aushärten zu lassen. Die Nachgiebigkeit der auf diese Weise hergestellten Dichtleisten läßt jedoch zu wünschen übrig. Weiter ist es damit nicht ohne weiteres möglich, relativ lange und unregelmäßige Fugen, wie sie beispielsweise in Fenstern und Türen auftreten, zuverlässig abzudichten. Man ist dort vielmehr auf vorgefertigte Hohlprofildichtungen angewiesen, die nachträglich am Tür- und/ oder Fensterrahmen befestigt, beispielsweise angeklebt oder aufgerastet werden. Damit lassen sich aber nur relativ einfache, geradlinige oder schwach gekrümmte Dichtungskonturen abdichten, da bei stärkeren Krümmungen oder gar bei scharfkantigen Abbiegungen Verwerfungen im Dichtungsschlauch auftreten können, die zu Undichtigkeiten führen. Hinzu kommt der relativ hohe Fertigungs- und Montageaufwand, der einer rationellen Arbeitsweise entgegensteht.

Ein Verfahren der eingangs genannten Art zum Auftragen eines Profilstrangs auf eine Glasscheibe zu Montagezwecken mittels der Klebetechnik im Automobilbau ist aus der EP-A-444 998 (vgl. Oberbegriff der Ansprüche 1, 4 und 17) bekannt. Dabei wird der Profilstrang derart auf die Glasscheibe aufgebracht, daß die beiden Schenkel von der Glasscheibe weg weisen und eine offene Rinne bilden. Die Rinne ist für die Aufnahme eines Klebstoffes bestimmt, mit dem die Glasscheibe in den Fahrzeugrahmen eingeklebt wird. Ein derartiger Profilstrang ist jedoch relativ unnachgiebig und als Dichtung für wiederholt zu öffnende und zu schließende Türen und Fenster wenig geeignet.

Ausgehend hiervon liegt der Erfindung die Aufgabe zugrunde, ein Verfahren und eine Vorrichtung der eingangs angegebenen Art zu entwickeln, womit es möglich ist, Profilstränge unter Hohlraumbildung auch an kompliziert gestalteten Unterlagen besonders einfach und rationell anzubrigen.

Zur Lösung dieser Aufgabe werden die in den Ansprüchen 1, 4, 16 und 17 angegebenen Merkmalskombinationen vorgeschlagen. Weitere vorteilhafte Ausgestaltungen und Weiterbildungen der Erfindung ergeben sich aus den abhängigen Ansprüchen.

Die erfindungsgemäße Lösung geht von dem Gedanken aus, daß der Profilstrang fortlaufend mit seinen freien Schenkelenden unter Einschluß eines Hohlraums auf die Unterlage appliziert und angeklebt wird. Als Kunststoffmaterial wird dabei zweckmäßig ein Ein- oder Zweikomponenten-Reaktionskunststoff, insbesondere Polyurethan verwendet, der bereits im Zuge der Herstellung eine ausreichende Standfestigkeit besitzt. Zur Verbesserung der Formstabilität im Zuge der Herstellung ist es von Vorteil, wenn der Profilstrang fortlaufend, beginnend an den Schenkelenden und erst zeitlich danach in den weiteren Querschnittsbereichen ausgeformt wird und wenn die Schenkelenden vor der vollständigen Ausformung in den weiteren Querschnittsbereichen auf die Unterlage appliziert und angeklebt werden.

Zur Durchführung des erfindungsgemäßen Verfahrens wird eine Vorrichtung zum Formen und zum Auftragen eines Profilstrangs auf eine Unterlage vorgeschlagen, deren Düsenkörper eine Fußpartie und eine über eine Fußkante an die Fußpartie angrenzende Stirnpartie sowie einen mit dem Eintrittskanal kommunizierenden, austrittsseitig an zwei an ihrem einen Ende begrenzten, zueinander parallelen Applikationsabschnitten zur Fußpartie hin und an einen die Applikationsabschnitte an ihrem anderen Ende über die Fußkante hinweg miteinander verbindenden Profilformungsabschnitt zur Stirnpartie hin offenen Düsenspalt aufweist. Zur Bildung des im wesentlichen U-förmigen Profilstrangs ist der Düsenspalt im Bereich des Profilformungsabschnitts durch eine überwiegend konvex gekrümmte innere Begrenzungsfläche und eine überwiegend konkav gekrümmte äußere Begrenzungsfläche begrenzt. Längs der Applikationsabschnitte weist der Düsenspalt zweckmäßig eine konstante austrittsseitige Spaltweite auf, während er längs des Profilformungsabschnitts zur Erzeugung einer Riffelung oder Wellung auf der Innen- oder Außenfläche des Profilstrangs auch eine variable austrittsseitige Spaltweite aufweisen kann. Zur Erhöhung der Haftfestigkeit an der Unterlage kann es von Vorteil sein, wenn der Düsenspalt zur Erzeugung eines verbreiterten Schenkelendes im Bereich der Applikationsabschnitte eine von innen her zur Fußfläche hin sich erweiternde Spaltweite aufweist. Die Länge der Applikationsabschnitte sollte dabei mindestens dem Dreifachen der austrittsseitigen Spaltweite entsprechen.

Zum Auftragen des Profilstrangs auf eine ebene Unterlage weist der Düsenkörper zweckmäßig eine ebene, durch die Applikationsabschnitte des Düsenspalts unterbrochene Fußpartie auf. Um trotz der relativ niedrigen Viskosität des Kunststoffmaterials beim Auftragvorgang eine ausreichende Standfestigkeit zu erzielen, ist es wichtig, daß die Begrenzungsflächen des Düsenspalts im Bereich des Profilformungsabschnitts in Austrittsrichtung über eine mindestens der Spaltweite entsprechende Strecke parallel zur Ebene der Fußpartie verlaufen.

Beim bestimmungsgemäßen Gebrauch wird der mit dem Kunststoffmaterial unter Druck beaufschlagte Düsenkörper mit zur Unterlage weisender Fußpartie parallel zu den Applikationsabschnitten des Düsenspalts so über die Unterlage verschoben, daß zunächst über die Applikationsabschnitte die freien Schenkelenden des Profilstrangs an der Unterlage angeklebt werden, solange die übrigen Querschnittsteile sich noch innerhalb des Düsenkörpers befinden und dort ausgeformt werden. Wenn schließlich das Material aus dem Profilformungsabschnitt des Düsenspalts aus dem Düsenkörper austritt, ist es an seinen freien schenkelenden bereits an der Unterlage angeklebt. Dadurch wird erreicht, daß das Herausdrücken des Profilstrangs im Bereich des Profilformungsabschnitts durch die über die an der Unterlage angeklebten Schenkelenden beim Verschieben des Düsenkörpers ausgeübten Scherkräfte unterstützt wird . Der Profilstrang wird über die angeklebten Schenkelenden aus dem Düsenspalt also quasi "herausgezogen".

Zur Erhöhung der Standfestigkeit des noch nicht ausgehärteten Profilstrangs kann es von Vorteil sein, wenn die innere Begrenzungsfläche des Düsenspalts an der Stirnpartie in Austrittsrichtung vorzugsweise um ein Mehrfaches der Spaltweite über dessen äußere Begrenzungsfläche übersteht, wobei der Überstand im Verlauf des Profilformungsabschnitts von der Fußkante aus zweckmäßig zunimmt. Die innere Begrenzungsfläche des Düsenspalts wird vorteilhafterweise durch die Außenwand eines in den Düsenkörper eingeformten Düsenkerns gebildet, der im Austrittsbereich durch den Düsenspalt von der äußeren Begrenzungsfläche des Düsenkörpers getrennt ist.

Das erfindungsgemäße Verfahren und die erfindungsgemäße Vorrichtung eignen sich besonders zur Herstellung einer Dichtungsanordnung mit einem Profilstrang aus einem elastomeren Kunststoffmaterial und zu dessen Befestigung an einer Unterlage unter Bildung eines im Querschnitt geschlossenen Hohlraums, wobei der Profilstrang zumindest partiell ein im wesentlichen U-förmiges offenes Profil mit zwei freien Schenkeln aufweist und mit seinen freien Schenkelenden unter Einschluß des im Querschnitt geschlossenen Hohlraums mit der Unterlage verbunden, vorzugsweise verklebt ist. Grundsätzlich ist es dabei auch möglich, den Profilstrang mit mindestens einer über seine Außenseite überstehenden Rippe oder Lippe oder mit einer im Querschnitt welligen oder geriffelten Innen- und/oder Außenfläche zu versehen.

Im folgenden wird die Erfindung anhand der in der Zeichnung in schematischer Weise dargestellten Ausführungsbeispiele näher erläutert. Es zeigen
- Fig. 1: eine Ansicht eines Düsenkörpers von unten in schaubildlicher Darstellung;
- Fig. 2: den Düsenkörper nach Fig. 1 im Zuge der Applikation eines Profilstrangs auf eine Unterlage in schaubildlicher Darstellung;
- Fig. 3: eine Seitenansicht eines gegenüber Fig. 1 abgewandelten Düsenkörpers in teilweise geschnittener Darstellung;
- Fig. 4: einen Querschnitt durch einen an einer Unterlage befestigten, kompliziert geformten Profilstrang.

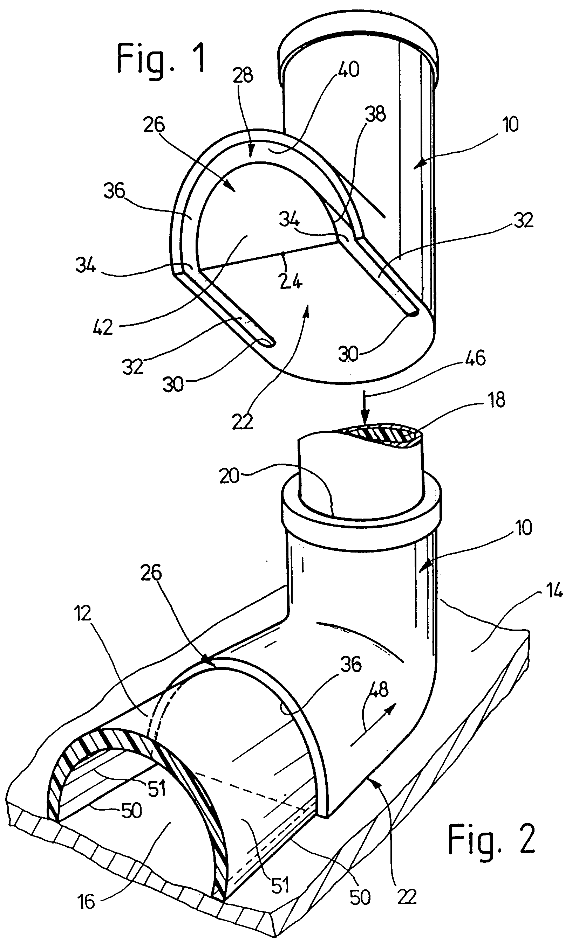

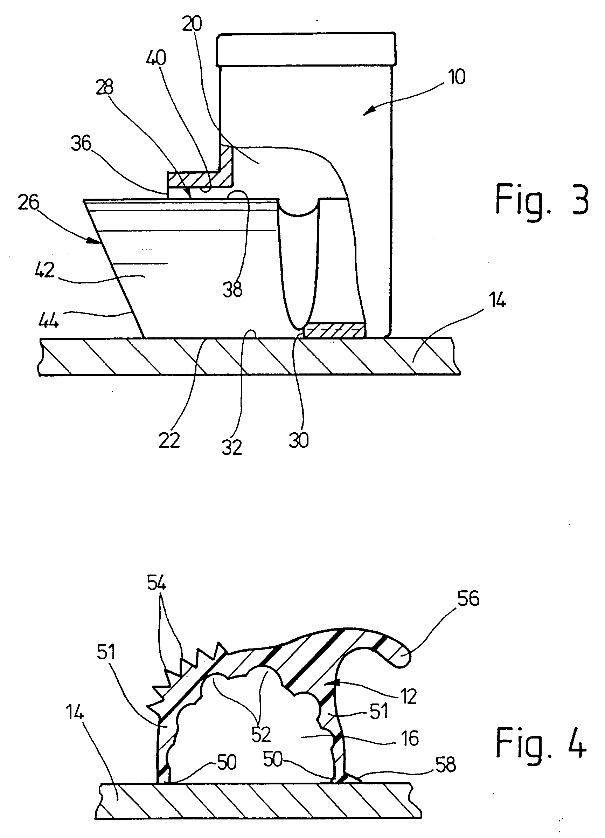

Die in den Fig. 1 bis 3 gezeigten Düsenkörper 10 sind zum Auftragen eines Profilstrangs 12 aus einem vorzugsweise elastomer aushärtenden Kunststoff auf eine Unterlage 14 bestimmt, wobei zwischen Profilstrang 12 und Unterlage 14 ein die Nachgiebigkeit des Profilstrangs erhöhender Hohlraum 16 gebildet wird. Der Düsenkörper weist zu diesem Zweck einen mit unter Druck stehendem pastösem, elastomer aushärtbarem Kunststoffmaterial 18 beaufschlagbaren Eintrittskanal 20, eine ebene Fußpartie 22, eine über eine Fußkante 24 an die Fußpartie 22 angrenzende Stirnpartie 26 sowie einen mit dem Eintrittskanal 20 kommunizierenden Düsenspalt 28 auf. Der Düsenspalt 28 ist austrittsseitig an zwei an ihrem einen Ende 30 begrenzten, zueinander parallelen Applikationsabschnitten 32 zur Fußpartie 22 hin und an einem die Applikationsabschnitte 32 an ihrem anderen Ende 34 über die Fußkante 24 hinweg miteinander verbinden Profilformungsabschnitt 36 zur Stirnpartie 26 hin offen. Im Bereich des Profilformungsabschnitts 36 ist der Düsenspalt 28 durch eine überwiegend konvex gekrümmte innere Begrenzungsfläche 38 und eine überwiegend konkav gekrümmte äußere Begrenzungsfläche 40 begrenzt. Die innere Begrenzungsfläche 38 ist dabei durch die Außenwand eines in den Düsenkörper 10 eingeformten Düsenkerns 42 gebildet. Bei dem in Fig. 1 gezeigten Ausführungsbeispiel fluchtet der Düsenkern 42 im Bereich der Stirnpartie 26 mit den benachbarten Teilen des Düsenkörpers 10. Beim Ausführungsbeispiel nach Fig. 3 steht der Düsenkern 42 mit der inneren Begrenzungsfläche 38 des Düsenspalts 2 im Bereich der Stirnpartie 26 über die äußere Begrenzungsfläche 40 des Zwischenspalts 28 über, wobei der Überstand von der Fußkante 24 aus unter Bildung einer schrägen Stirnfläche 44 nach oben hin zunimmt.

Zum Formen und zum Auftragen des Profilstrangs 12 auf die Unterlage 14 wird der Düsenkörper 10 über den Eintrittskanal 20 in Richtung des Pfeils 46 unter Druck mit dem pastösen Kunststoffmaterial 18 beaufschlagt und gleichzeitig in Richtung des Pfeils 48 mit seiner Fußpartie 22 parallel zu den Applikationsabschnitten 22 über die Unterlage 14 verschoben. Dabei wird zunächst das im Bereich der Applikationsabschnitte 32 des Düsenspalts 28 zur Fußpartie 22 hin austretende Kunststoffmaterial auf die Unterlage 14 appliziert und mit dieser klebend verbunden. Beim weiteren Verschieben des Düsenkörpers 10 tritt der Profilstrang 12 aus dem Profilformungsabschnitt 36 im Bereich der Stirnpartie 26 aus dem Düsenspalt 28 aus, wobei die Enden 50 der Schenkel 51 des Profilstrangs 12 bereits an der Unterlage haften. Das Kunststoffmaterial 18 ist so eingestellt, daß auch im pastösen Zustand bereits eine ausreichende Standfestigkeit des Profilstrangs 12 gewährleistet ist. Durch den in Fig. 3 gezeigten Überstand des Düsenkerns 42 löst sich der Profilstrang 12 zunächst von der äußeren Begrenzungsfläche 40, während er von der inneren Begrenzungsfläche 48 noch ein Stück weit geführt wird. Damit läßt sich eine bessere Ausformung und Formstabilität erzielen. Entsprechendes gilt für den schrägen Verlauf des Düsenkerns 42 im Bereich der Stirnfläche 44.

Wie aus Fig. 4 zu ersehen ist, können durch entsprechende Formgestaltung der inneren und äußeren Begrenzungsflächen 38, 40 auch kompliziert gestaltete Profilstränge 12 beispielsweise mit inneren Wellungen 52, mit äußeren Riffelungen 54, mit außen angeformten Dichtungslippen 56 und mit verbreiterten Schenkelenden 58 erzeugt werden.

Zusammenfassend ist folgendes festzustellen: Die Erfindung bezieht sich auf ein Verfahren und eine Vorrichtung zum Formen und zum Auftragen eines Profilstrangs 12 auf eine Unterlage 14, bei welchem ein pastöses, elastomer aushärtbares, klebriges Kunststoffmaterial 18 unter Bildung des Profilstrangs 12 geformt und fortlaufend auf die Unterlage 14 appliziert und dabei an dieser angeklebt und anschließend ausgehärtet wird. Um die Nachgiebigkeit des vorzugsweise als Dichtungsleiste ausgebildeten Profilstrangs zu erhöhen, wird gemäß der Erfindung das Kunststoffmaterial zu einem offenen, ein zumindest partiell im wesentlichen U-förmiges Profil mit zwei freien Schenkeln 51 aufweisenden Profilstrang 12 geformt und unter Einschluß eines Hohlraums 16 fortlaufend mit seinen freien Schenkelenden 50 auf die Unterlage 14 appliziert.

## Patentansprüche

1. Verfahren zum Formen und zum Auftragen eines Profilstrangs (12) auf eine Unterlage, bei welchem ein pastöses, vorzugsweise elastomer aushärtbares, klebriges Kunststoffmaterial (18) unter Bildung des Profilstrangs (12) geformt und fortlaufend unter Relativbewegung auf die Unterlage (14) appliziert und anschließend ausgehärtet wird, wobei das Kunststoffmaterial (18) zu einem offenen, zumindest partiell im wesentlichen U-förmigen Profil mit zwei freien Schenkeln (51) geformt wird, **dadurch gekennzeichnet**, daß der Profilstrang (12) fortlaufend mit seinen freien Schenkelenden (50) unter Einschluß eines Hohlraums (16) auf die Unterlage (14) appliziert und angeklebt wird.

2. Verfahren nach Anspruch 1, **dadurch gekennzeichnet**, daß als Kunststoffmaterial ein Ein- oder Zweikomponenten-Reaktionskunststoff, insbesondere Polyurethan, verwendet wird.

3. Verfahren nach Anspruch 1 oder 2, **dadurch gekennzeichnet**, daß der Profilstrang (12) fortlaufend beginnend an den Schenkelenden (50) und erst zeitlich danach in den weiteren Querschnittsbereichen ausgeformt wird, und daß die Schenkelenden vor der vollständigen Ausformung in den weiteren Querschnittsbereichen auf die Unterlage (14) appliziert und angeklebt werden.

4. Vorrichtung zum Formen und zum Auftragen eines Profilstrangs (12) auf eine Unterlage (14), mit einem über einen Eintrittskanal (20) mit unter Druck stehendem pastösem, vorzugsweise elastomer aushärtbarem Kunststoffmaterial (18) beaufschlagbaren Düsenkörper (10), **dadurch gekennzeichnet,** daß der Düsenkörper (10) eine Fußpartie (22) und eine über eine Fußkante (24) an die Fußpartie (22) angrenzende Stirnpartie (26) sowie einen mit dem Eintrittskanal (20) kommunizierenden, austrittsseitig an zwei an ihrem einen Ende (30) begrenzten, zueinander parallelen Applikationsabschnitten (32) zur Fußpartie (22) hin und an einem die Applikationsabschnitte (32) an ihrem anderen Ende (34) über die Fußkante (24) hinweg miteinander verbindenden Profilformungsabschnitt (36) zur Stirnpartie (26) hin offenen Düsenspalt (28) aufweist.

5. Vorrichtung nach Anspruch 4, **dadurch gekennzeichnet**, daß der Düsenspalt (28) im Bereich des Profilformungsabschnitts (36) durch eine überwiegend konvex gekrümmte innere Begrenzungsfläche (38) und eine überwiegend konkav gekrümmte äußere Begrenzungsfläche (40) begrenzt ist.

6. Vorrichtung nach Anspruch 4 oder 5, **dadurch gekennzeichnet**, daß der Düsenspalt (28) längs der Applikationsabschnitte (32) eine konstante austrittsseitige Spaltweite aufweist.

7. Vorrichtung nach einem der Ansprüche 4 bis 6, **dadurch gekennzeichnet**, daß der Düsenspalt (28) längs des Profilformungsabschnitts (36) eine variable austrittsseitige Spaltweite aufweist.

8. Vorrichtung nach einem der Ansprüche 4 bis 7, **dadurch gekennzeichnet**, daß der Düsenkörper (10) eine ebene, durch die Applikationsabschnitte (32) des Düsenspalts (28) unterbrochene Fußpartie (22) aufweist.

9. Vorrichtung nach einem der Ansprüche 4 bis 8, **dadurch gekennzeichnet**, daß die Begrenzungsflächen (38,40) des Düsenspalts (28) im Bereich des Profilformungsabschnitts (36) in Austrittsrichtung über eine mindestens der Spaltweite entsprechende Strecke parallel zur Ebene der Fußpartie (22) verlaufen.

10. Vorrichtung nach einem der Ansprüche 4 bis 9, **dadurch gekennzeichnet**, daß die innere Begrenzungsfläche (38) des Düsenspalts (28) an der Stirnpartie (26) in Austrittsrichtung vorzugsweise um ein Mehrfaches der Spaltweite über dessen äußere Begrenzungsfläche (40) übersteht.

11. Vorrichtung nach einem der Ansprüche 4 bis 10, **dadurch gekennzeichnet**, daß der Düsenspalt (28) im Bereich der Applikationsabschnitte (32) eine von innen her zur Fußpartie (22) hin sich erweiternde Spaltweite aufweist.

12. Vorrichtung nach einem der Ansprüche 4 bis 11, **dadurch gekennzeichnet**, daß die innere Begrenzungsfläche (38) des Düsenspalts (28) durch die Außenwand eines in den Düsenkörper (10) eingeformten Düsenkerns (42) gebildet ist.

13. Vorrichtung nach einem der Ansprüche 4 bis 12, **dadurch gekennzeichnet**, daß die Applikationsabschnitte (32) eine mindestens der dreifachen austrittsseitigen Spaltweite entsprechende Länge aufweisen.

14. Vorrichtung nach einem der Ansprüche 4 bis 13, **dadurch gekennzeichnet**, daß der Düsenkörper (10) mit einem Ein- oder Zweikomponenten-Reaktionskunststoff, insbesondere unter Bildung von Polyurethan, beaufschlagbar ist.

15. Vorrichtung nach einem der Ansprüche 4 bis 14, **dadurch gekennzeichnet**, daß der Düsenkörper (10) mit zur Unterlage (14) weisender Fußpartie (22) entlang einer vorgegebenen Bewegungsbahn mit tangential zu dieser ausgerichteten Applikationsabschnitten (32) des Düsenspalts (28) relativ zur Unterlage (14) verschiebbar und dabei mit dem pastösen Kunststoffmaterial (18) beaufschlagbar ist.

16. Verwendung des Verfahrens nach einem der Ansprüche 1 bis 3 oder der Vorrichtung nach einem der Ansprüche 4 bis 15 zur Herstellung von elastisch nachgiebigen, mit einer Unterlage (14) fest verbundenen und zusammen mit dieser einen an seinem Umfang geschlossenen Hohlraum (16) begrenzenden Dichtungsanordnung.

17. Dichtungsanordnung mit einem an einer Unterlage (14) befestigten, zumindest partiell ein im wesentlichen U-förmiges offenes Profil mit zwei freien Schenkeln (51) aufweisenden Profilstrang (12), vorzugsweise aus einem elastomeren Kunststoffmaterial, **dadurch gekennzeichnet**, daß der Profilstrang (12) mit seinen freien Schenkelenden (50) unter Einschluß eines im Querschnitt geschlossenen Hohlraums (16) mit der Unterlage (14) verbunden, vorzugsweise verklebt ist.

18. Dichtungsanordnung nach Anspruch 17, **gekennzeichnet durch** mindestens eine über die Außenfläche des Profilstrangs (12) abstehende Rippe (54) oder Dichtlippe (56).

19. Dichtungsanordnung nach Anspruch 17 oder 18, **dadurch gekennzeichnet**, daß der Profilstrang (12) eine im Querschnitt wellige (52) oder geriffelte (54) Innenfläche und/oder Außenfläche aufweist.

## Claims

1. Process for forming and applying an extruded profile (12) onto a substrate, whereby a paste-like, preferably elastomerically curable, sticky plastic material (18) is shaped to form the extruded profile (12) and continuously applied with relative movement onto the substrate (14) and then cured, the plastic material (18) being shaped into an open, at least partially substantially U-shaped profile with two free limbs (51), **characterized in** that the extruded profile (12) is continuously applied and affixed by its free limb ends (50) onto the substrate (14) so as to include a cavity (16).

2. Process according to claim 1, **characterized in** that a one- or two-component reaction plastic, in particular polyurethane, is used as a plastic material.

3. Process according to claim 1 or 2, **characterized in** that the extruded profile (12) is extruded continuously, starting with the limb ends (50) and continuing only some time later with the further cross-sectional regions, and that the limb ends are applied and affixed onto the substrate (14) prior to complete extrusion of the further cross-sectional regions.

4. Device for forming and applying an extruded profile (12) onto a substrate (14), having a die body (10), into which pressurized paste-like, preferably elastomerically curable plastic material (18) may be admitted through an inlet channel (20), **characterized in** that the die body (10) comprises a bottom part (22) and a front part (26), which adjoins the bottom part (22) via a bottom edge (24), as well as a die gap (28) which communicates with the inlet channel (20) and at the outlet side is open towards the bottom part (22) at two parallel application portions (32) delimited at their one end (30) and towards the front part (26) at a profile-forming portion (36), which connects the application portions (32) to one another at their other end (34) across the bottom edge (24).

5. Device according to claim 4, **characterized in** that the die gap (28) in the region of the profile-forming portion (36) is delimited by a predominantly convex inner delimitation surface (38) and a predominantly concave outer delimitation surface (40).

6. Device according to claim 4 or 5, **characterized in** that the die gap (28) along the application portions (32) has a constant outlet gap width.

7. Device according to one of claims 4 to 6, **characterized in** that the die gap (28) along the profile-forming portion (36) has a variable outlet gap width.

8. Device according to one of claims 4 to 7, **characterized in** that the die body (10) has a flat bottom part (22) which is interrupted by the application portions (32) of the die gap (28).

9. Device according to one of claims 4 to 8, **characterized in** that the delimitation surfaces (38, 40) of the die gap (28) in the region of the profile-forming portion (36) extend in outlet direction parallel to the plane of the bottom part (22) over a distance corresponding at least to the gap width.

10. Device according to one of claims 4 to 9, **characterized in** that the inner delimitation surface (38) of the die gap (28) at the front part (26) projects in outlet direction preferably by a multiple of the gap width beyond the outer delimitation surface (40) of said die gap.

11. Device according to one of claims 4 to 10, **characterized in** that the die gap (28) in the region of the application portions (32) has a gap width which widens from the inside towards the bottom part (22).

12. Device according to one of claims 4 to 11, **characterized in** that the inner delimitation surface (38) of the die gap (28) is formed by the outer wall of a die core (42) formed in the die body (10).

13. Device according to one of claims 4 to 12, **characterized in** that the application portions (32) have a length corresponding at least to three times the outlet gap width.

14. Device according to one of claims 4 to 13, **characterized in** that the die body (10) may be acted upon by a one- or two-component reaction plastic, in particular with the simultaneous formation of polyurethane.

15. Device according to one of claims 4 to 14, **characterized in** that the die body (10) having the bottom part (22) directed towards the substrate (14) is displaceable relative to the substrate (14) along a predetermined path of motion with the application portions (32) of the die gap (28) aligned tangentially relative to said path of motion and, in the process, may be acted upon by the paste-like plastic material (18).

16. Use of the process according to one of claims 1 to 3 or of the device according to one of claims 4 to 15 to manufacture an elastically resilient sealing arrangement, which is firmly connected to a substrate (14) and together with said substrate delimits a cavity (16) which is closed at its periphery.

17. Sealing arrangement with an extruded profile (12), which is fastened to a substrate (14) and comprises at least partially a substantially U-shaped open profile with two free limbs (51), preferably made of an elastomeric plastic material, **characterized in** that the extruded profile (12) is connected, preferably glued, by its free limb ends (50) to the substrate (14) so as to include a cavity (16) which is closed in cross section.

18. Sealing arrangement according to claim 17, **characterized by** at least one rib (54) or sealing lip (56) projecting from the outer surface of the extruded profile (12).

19. Sealing arrangement according to claim 17 or 18, **characterized in** that the extruded profile (12) has an inner and/or outer surface which is corrugated (52) or fluted (54) in cross section.

## Revendications

1. Procédé pour former et appliquer un cordon profilé (12) sur un support, par lequel une matière plastique (18) pâteuse et collante, de préférence à durcissement élastomère, est façonnée avec formation d'un cordon profilé (12) et appliquée en continu, avec un mouvement relatif, sur le support (14), puis durcie, la matière plastique (18) étant façonnée de manière à former un profil ouvert qui présente au moins en partie une forme sensiblement en U avec deux branches (51) libres, **caractérisé en ce** que le cordon profilé (12) est appliqué et collé en continu avec ses extrémités de branches libres (50) sur le support (14), en incluant une cavité (16).

2. Procédé selon la revendication 1, caractérisé en ce qu'il utilise comme matière plastique, une matière plastique de réaction à un ou deux composants, en particulier du polyuréthanne.

3. Procédé selon la revendication 1 ou 2, caractérisé en ce que le cordon profilé (12) est démoulé en continu en commençant aux extrémités (50) des branches et seulement après dans les autres zones de la section transversale, et que les extrémités des branches sont appliquées et collées sur le support (14) avants le démoulage complet dans les autres zones de la section transversale.

4. Dispositif pour former et appliquer un cordon profilé (12) sur un support (14), comprenant un corps de filière (10) lequel peut être alimenté, par l'intermédiaire d'un canal d'entrée (20), avec une matière plastique (18) pâteuse sous pression, de préférence à durcissement élastomère, **caractérisé en ce** que le corps de filière (10) comporte une partie de pied (22) et une partie frontale (26) qui se raccorde par l'intermédiaire d'une arête de pied (24) à la partie de pied (22), ainsi qu'une fente de filière (28) communiquant avec le canal d'entrée (20) et ouverte du côté sortie, en direction de la partie de pied (22), sur deux sections d'application (32) parallèles et limitées à l'une de leurs extrémités (30), et, en direction de la partie frontale (26), sur une section de profilage (36) qui relie les sections d'application (32) à l'autre extrémité (34) par dessus l'arête de pied (24).

5. Dispositif selon la revendication 4, caractérisé en ce que la fente de filière (28) est délimitée dans la région de la section de profilage (36) par une surface périphérique intérieure (38) essentiellement convexe et par une surface périphérique extérieure (40) à courbure essentiellement concave.

6. Dispositif selon la revendication 4 ou 5, caractérisé en ce que la fente de filière (28) présente, du côté sortie, le long des sections d'application (32), une largeur de fente constante.

7. Dispositif selon l'une des revendications 4 à 6, caractérisé en ce que la fente de filière (28) présente, du côté sortie, le long de la section de profilage (36), une largeur de fente variable.

8. Dispositif selon l'une des revendications 4 à 7, caractérisé en ce que le corps de filière (10) comprend une partie de pied (22) plane interrompue par les sections d'application (32) de la fente de filière (28).

9. Dispositif selon l'une des revendications 4 à 8, caractérisé en ce que les surfaces périphériques (38, 40) de la fente de filière (28) s'étendent dans la région de la section de profilage (36), en direction de la sortie, parallèlement au plan de la partie de pied (22) sur une distance correspondant au moins à la largeur de fente.

10. Dispositif selon l'une des revendications 4 à 9, caractérisé en ce que la surface périphérique intérieure (38) de la fente de filière (28) dépasse, sur la partie frontale (26) dans la direction de sortie, de préférence d'un multiple de la largeur de fente, de la surface périphérique extérieure (40) de ladite fente de filière.

11. Dispositif selon l'une des revendications 4 à 10, caractérisé en ce que la fente de filière (28) présente dans la région des sections d'application (32) une largeur de fente qui s'élargit à partir de l'intérieur en direction de la partie de pied (22).

12. Dispositif selon l'une des revendications 4 à 11, caractérisé en ce que la surface périphérique intérieure (38) de la fente de filière (28) est constituée par la paroi extérieure d'un noyau de filière (42) conformé dans le corps de filière (10).

13. Dispositif selon l'une des revendications 4 à 12, caractérisé en ce que les sections d'application (32) présentent une longueur qui correspond au moins à trois fois la largeur de fente du côté extérieur.

14. Dispositif selon l'une des revendications 4 à 13, caractérisé en ce que le corps de filière (10) peut être alimenté en une matière plastique de réaction à un ou deux composants, en particulier avec formation de polyuréthanne.

15. Dispositif selon l'une des revendications 4 à 14, caractérisé en ce que le corps de filière (10) dont la partie de pied (22) est dirigée vers le support (14), peut être déplacé par rapport au support (14) le long d'une trajectoire prédéterminée, avec des sections d'application (32) de la fente de filière (28) orientées tangentiellement à celle-ci, et tout en étant alimenté en matière plastique (18) pâteuse.

16. Mise en oeuvre du procédé selon l'une des revendications 1 à 3 ou du dispositif selon l'une des revendications 4 à 15 pour la réalisation d'un système de joints d'étanchéité élastiques flexibles solidarisés avec un support (14) et formant avec celui-ci une cavité (16) fermée sur sa périphérie.

17. Système de joints d'étanchéité avec un cordon profilé (12) constitué de préférence d'une matière plastique élastomère, fixé sur un support (14) et présentant au moins en partie un profil ouvert sensiblement en U avec deux branches (51) libres, caractérisé en ce que le cordon profilé (12) est rattaché au support (14), de préférence collé, avec les extrémités (50) de ses branches libres, avec, vu en coupe transversale, inclusion d'une cavité (16) fermée.

18. Système de joints d'étanchéité selon la revendication 17, caractérisé en ce qu'il comprend au moins une nervure (54) ou lèvre d'étanchéité (56) dépassant de la surface extérieure du cordon profilé (12).

19. Système de joints d'étanchéité selon la revendication 17 ou 18, caractérisé en ce que le cordon profilé (12) présente, en coupe transversale, une surface intérieure et/ou une surface extérieure ondulée (52) ou cannelée (54).
